# EUROPEAN PATENT APPLICATION

(11) **EP 1 039 358 A2**
(43) Date of publication of application: **27.09.2000**
(21) Application number: 00103670.6
(22) Date of filing: 22.02.2000
(51) Int. Cl.: G05B 19/048

(54) **Remote control apparatus for automatic distributors of goods and/or services**

(30) Priority: 25.02.1999 IT MI990382
(71) Applicant: Lupi, Stefano, 06126 Perugia (IT); Castellani, Andrea, 06060 Castel Rigone (Prov. of Perugia) (IT); Castellani, Sergio, 06060 Castel Rigone (Prov. of Perugia) (IT)
(72) Inventor: Castellani, Andrea, 06060 Castel Rigone (prov. Perugia) (IT); Castellani, Sergio, 06060 Castel Rigone (prov. Perugia) (IT)
(74) Representative: Gervasi, Gemma, Dr.

(57) **Abstract**

An apparatus (1) is described for the remote control of at least one automatic distributor (2) of goods and/or services equipped with at least one management/diagnosis module: this apparatus comprises at least means (5) suitable for receiving at least one item of information from the distributor management/diagnosis module (preferably but not necessarily in reply to a query message), means for processing the information received from the automatic distributor and means (driven by the processing means) adapted for generating at least one predetermined message and sending it to at least one predetermined user through transmission means (3).

## Description

### Field of the invention.

The invention consists of an apparatus for the remote control of at least one automatic distributor of goods and/or services equipped with at least one management/diagnosis module

### Prior art.

Apparata for the automatic distribution of goods (for example hot or cold beverages, snacks or similar, packets of cigarettes, fuel, etc.) and/or of services, such as the issue of account statements (social security, bank accounts, etc.) or registry certificates, have been known and widely used for some time.

Among the apparata for the automatic distribution of goods and/or services, those equipped with one or more management/diagnosis modules are well known and widely used, that is apparata with one or more modules which manage the apparatus itself and, if necessary, perform at leas one "diagnosis" routine of the apparatus functions.

Preferably, the management/diagnosis module puts the controlled apparatus "out of order" when it detects a malfunction that it is not able to remedy automatically: this "out of order" status causes inconvenience to users and, above all, it causes (or can cause) considerable economic loss to the operator of the distribution apparatus, loss which may be quite extensive, particularly if the malfunction occurs (or is detected) when the apparatus is unmanned and therefore continues for a fairly long time.

The remote control apparatus to which this invention refers is able to overcome this problem because it links up with the distributor management/diagnosis module to receive information from it about the status of the distributor, processes the information received and, in reply to the information processed, generates (if necessary) at least one message which its sent to at least one predetermined user (for example the operator of the distributor and/or the maintenance person) by means of a transmission device of a known type, such as the fixed or mobile telephone network.

### Summary of the invention.

This invention refers to a remote control apparatus for automatic distributor of goods and/or services equipped with at least one management/diagnosis module, which comprises at least means for receiving at least one item of information, means for processing the information received and means (driven by the processing means) for generating at least one predetermined message and sending it to at least one predetermined user by means of a transmission device.

Preferably but not necessarily, the apparatus according to the invention receives the information to be processed from the automatic distributor management/diagnosis module in reply to a query message sent to the management/diagnosis module by the aforementioned processing means.

### List of figures.

The invention will now be better described with reference to an embodiment thereof with a non limiting character shown in the enclosed figures, in which:
- figure 1 schematically shows a remote control apparatus according to the invention associated with a automatic distributor and with a transmission system;
- figure 2 schematically shows a possible sequence of functional steps performed by the logic unit of the remote control apparatus in figure 1;
- figure 3 schematically shows the remote control apparatus in figure 1 associated with two management/diagnosis modules;
- figure 4 schematically shows a possible sequence of functional steps to be inserted in the sequence of functional steps in figure 2 to run the remote control apparatus in figure 3.

In the enclosed figures, the corresponding elements will be identified with the same numerical references.

### Detailed description.

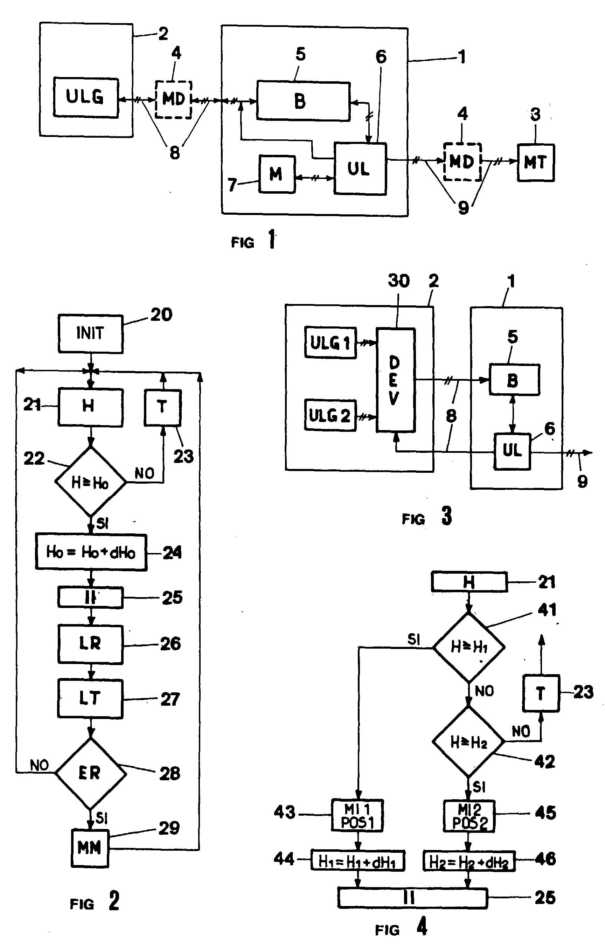

Figure 1 schematically shows a remote control apparatus 1 (realised according to the invention) associated with a automatic distributor 2 (equipped with a management/diagnosis module ULG) and with a transmission device 3.

The automatic distributor 2 may be used for providing any type of goods and/or service and comprises at least one plurality of electromechanical members controlled and managed (in a way not described herein because it is known and is extraneous to this invention) by the management/diagnosis module ULG for acquiring, processing and (if necessary) storing any data (such as, for example, the quantities of products distributed, the amount of supplies, etc.) concerning the management of the automatic distributor 2, and for indicating and (if required) storing the malfunctions found in the automatic distributor 2.

Figure 1 indicates only the management/diagnosis module ULG, while it omits (for simplicity of graphic representation) the electromechanical parts and all the other apparata in the automatic distributor 2 (such as, for example, the sensors connected to the ULG module, the circuits for interfacing the ULG module with the outside "world", etc.) because they are known and are extraneous to this invention.

The transmission system 3 may be composed of one of the known transmission means (such as, for example, the fixed or mobile telephone network, fax, etc.) which are available from time to time and/or preferred depending on the user's specific requirements: the transmission system 3 will therefore not be further described herein.

The remote control apparatus 1 comprises at least means 5 for receiving at least one item of information from the management/diagnosis module ULG of the automatic distributor 2 (by means of a first connection 8), means for processing the information received from the management/diagnosis module ULG and means (driven by the processing means) for generating at least one predetermined message and sending it, by means of a second connection 9, to the transmission device 3 for sending it to at least one predetermined user.

In the embodiment shown in figure 1 the means 5 for receiving at least one item of information from the management/diagnosis module ULG of the automatic distributor 2 are composed of a memory buffer, while the means for processing the information received, for generating at least one predetermined message and sending it to the transmission device 3 for sending it to at least one predetermined user are composed of a logic unit 6 with which, in figure 1, is associated a memory 7 which (without departing from the scope of the invention) may be incorporated in the logic unit 6.

Preferably but not necessarily, the management/diagnosis module ULG of the automatic distributor 2 sends the remote control apparatus 1 the information to be stored in the memory buffer 5 in response to a query message sent to it by the logic unit 6 by means of the first connection 8.

Still without departing from the scope of the invention, it is possible to replace the memory buffer 5 and/or the logic unit 6 with other functionally equivalent circuit components (not described herein because they are known to any technician in the field) and/or to integrate in a single component (integrated circuit) the memory buffer 5, the logic unit 6 and/or the memory 7 (or the functionally equivalent circuit components).

To allow the maximum flexibility in the positioning of the remote control apparatus 1, of the automatic distributor 2 and of the transmission system 3, without departing from the scope of the invention, it is possible to insert a modem 4 on the first connection 8 (between the management/diagnosis module ULG of the automatic distributor 2 and the means 5 for receiving at least one item of information from the aforesaid management/diagnosis module ULG), respectively on the second connection 9 between the means for generating at least one predetermined message and the transmission device 3: these modems 4, shown in figure 1 with a dashed line, will not be described herein because they are known and are extraneous to this invention.

Figure 2 schematically shows a possible sequence of functional steps performed by the logic unit of the remote control apparatus in figure 1.

The logic unit 6 first acquires (step 20) the selling data, preferably but not necessarily recorded in the memory 7; if the management/diagnosis module ULG sends the control apparatus 1 a string of data (which is memorised in the buffer 5) comprising the information to be processed in one or more fields, preferably but not necessarily during the setting step 20 the logic unit 6 acquires, among other things, the position of the data string (address of the initial byte and length in bytes) of the field (or fields) containing the information to be processed.

Furthermore, if the management/diagnosis module ULG sends the control apparatus 1 the data string in response to a query message, preferably but not necessarily during the setting step 20 the logic unit 6 also acquires the query message.

Without departing from the scope of the invention, the logic unit 6 can acquire the position of the above-mentioned field (or fields) in the data string and the query message in a step of the sequence of functional steps shown in figure 2 after the setting step 20, for example immediately before sending the query message to the management/diagnosis module ULG.

Setting once (step 20) has been completed, the logic unit 6 acquires (step 21) the current time and compares it (step 22) with a reference value H0: if the current time is lower than the reference value H0, the logic unit 6 waits for a predetermined time T (step 23) before acquiring the current time again (step 21), otherwise the logic unit 6 increases (step 24) the reference value H0 by a predetermined quantity dH0, receives (step 26) at least one item of information from the management/diagnosis module ULG and records them in the means 5, processes the information (step 27) using, if necessary, a transcoding table contained in the memory 7 and detects (step 28) whether the processed information shows at least one malfunction (occurred in the automatic distributor 2) to be reported to at least one predetermined user.

If it finds (step 28) that the processed information does not show at least one malfunction (occurred in the automatic distributor 2) to be reported to at least one predetermined user, the logic unit 6 again acquires the current time (step 21), otherwise it generates (step 29) at least one predetermined message, sends it (with the respective address) to the transmission system 3 for sending it to at least one user and again acquires the current time (step 21).

If the management/diagnosis module ULG sends the control apparatus 1 a data string in response to a query message, the logic unit 6 acquires the position in the data string of the field (or fields) containing the information to be processed and the query message, sends (step 25) the query message to the management/diagnosis module ULG and acquires (step 26) from the data string recorded in the means 5 the above-mentioned field (or fields) which it processes as said earlier (step 27).

Figure 3 schematically shows the remote control apparatus 1 in figure 1 associated with two management/diagnosis modules ULG: in the embodiment shown in figure 3 the two management/diagnosis modules (ULG1, ULG2) belong to the same automatic distributor 2 but, without departing from the scope of the invention, the two management/diagnosis modules (ULG1, ULG2) can belong to two distinct automatic distributors 2.

The two management/diagnosis modules (ULG1, ULG2) are connected to two scanning means 30 (not described herein because they are known) controlled by the logic unit 6 of the remote control apparatus 1 by means of the first connection 8: the means 5 of the remote control apparatus 1 therefore receive and store the information provided by the management/diagnosis module (ULG1, respectively ULG2) selected from time to time by the logic unit 6 by means of the scanning means 30.

In figure 3 the memory 7 is omitted and the connecting means (belonging to the first connection 8) which connect the logic unit 6 to the scanning means 30 are shown.

Figures schematically shows a possible sequence of functional steps to be inserted in the sequence of functional steps in figure 2 to run the remote control apparatus in figure 3.

Once the current time has been acquired (step 21), the logic unit 6 compares it (step 41) with a first reference value H1 associated with the management/diagnosis module ULG1: if the current time is lower than the first reference value H1, the logic unit 6 compares (step 42) the current time with a second reference value H2 associated with the management/diagnosis module ULG2, otherwise the logic unit 6 acquires (step 43) at least the query message MI1 to be sent to the management/diagnosis module ULG1, increases (step 44) the reference value H1 by a predetermined quantity dH1 and sends (step 25) the query message MI1 to the management/diagnosis module ULG1.

If the current time is lower than the second reference value H2, the logic unit 6 waits for a predetermined time T (step 23) before acquiring the current time again (step 21), otherwise the logic unit 6 acquires (step 45) at least the query message MI2 to be sent to the management/diagnosis module ULG2, increases (step 46) the reference value H2 by a predetermined quantity dH2 and sends (step 25) the query message MI2 to the management/diagnosis module ULG2.

If, in reply to the query message (MI1, respectively MI2), the management/diagnosis module (ULG1, respectively ULG2) sends the remote control apparatus 1 a data string, before increasing (step 44, respectively step 46) the reference value (H1, respectively H2) by a predetermined quantity (dH1, respectively dH2), the logic unit 6 also acquires (step 43, respectively step 45) the position (POS1, respectively POS2) in the string of data issued by the management/diagnosis module (ULG1, respectively ULG2) of the field (or fields) containing the information to be processed.

If the remote control apparatus 1 is associated with three or more management/diagnosis modules ULG, the further modifications to be made to the block diagram in figure 3, respectively the sequences of further functional steps to be added to those in figure 4, will not be described herein because any technician in the field can easily deduce them from the diagram in figure 3, respectively from the sequence of functional steps in figure 4, without having to carry out any inventive activity.

Without departing from the scope of the invention, it is possible for a technician to make on the remote control apparatus to which this description refers all the modifications and adjustments suggested by normal experience and by the natural evolution of the technique.

## Claims

1. Remote control apparatus for automatic distributors of goods and/or services equipped with at least one management/diagnosis module characterised in that it comprises at least means (5) suitable for receiving at least one item of information from the management/diagnosis module (ULG) of the automatic distributor (2) by means of a first connection (8), suitable for processing the information received from the management/diagnosis module (ULG) and means (driven by the processing means) suitable for generating at least one predetermined message and sending it, by means of a second connection (9), to a transmission device (3) for sending it to at least one predetermined user.

2. Apparatus according to claim 1, characterised in that the management/diagnosis module (ULG) of the automatic distributor (2) sends to the remote control apparatus (1) the at least one item of information received from the above-mentioned means (5) in response to a query message sent to the management/diagnosis module (ULG) by the processing means by means of the first connection (8).

3. Apparatus according to claim 1, characterised in that the means (5) suitable for receiving at least one item of information from the management/diagnosis module (ULG) of the automatic distributor (2) consist of a memory and in that the means suitable for processing at least one item of information received from the management/diagnosis module (ULG), for generating at least one predetermined message and sending it to the transmission device (3) for sending it to at least one predetermined user consist of a logic unit (6).

4. Apparatus according to claim 1, characterised in that it further comprises at least a modem (4) positioned on the first connection (8) between the management/diagnosis module (ULG) of the automatic distributor (2) and the means (5) suitable for receiving at least one item of information from the aforesaid management/diagnosis module (ULG), respectively on the second connection (9) between the means for generating the at least one predetermined message and the transmission device (3).

5. Apparatus according to claim 3, characterised in that the logic unit (6) performs in order at least the following sequence of functional steps:
- after having performed a setting step (step 20), acquiring (step 21) the current time and comparing (step 22) with a reference value (H0);
- if the current time is lower than the reference value (H0), waiting for a predetermined time (T, step 23) before acquiring the current time again (step 21), otherwise increasing (step 24) the reference value (H0) by a predetermined quantity (dH0), receiving (step 26) the at least one item of information to be processed from the management/diagnosis module (ULG), storing it in the memory (5) and processing it (step 27) to detect (step 28) whether the processed information shows at least one malfunction to be reported to the at least one predetermined user;
- if the processed information does not show at least one malfunction to be reported to the at least one predetermined user, again acquiring the current time (step 21); otherwise generating (step 29) at least one predetermined message, sending it with the respective address to the transmission device (3) for sending it to the at least one predetermined user and again acquiring the current time (step 21).

6. Apparatus according to claim 5, characterised in that the logic unit (6) processes (step 27) at least one item of information using a transcoding table.

7. Apparatus according to claim 5, wherein the management/diagnosis module (ULG) of the automatic distributor (2) sends to the remote control apparatus (1) a string of data comprising at least one field containing the at least one item of information to be processed, characterised in that during the selling step (step 20) the logic unit (6) acquires at least the position of the data string of the at least one field containing the at least one item of information to be processed.

8. Apparatus according to claim 7 characterised in that, if the management/diagnosis module (ULG) sends the remote control apparatus (1) the data string in response to a query message, the logic unit (6) acquires the query message during the selling step (step 20).

9. Apparatus according to claim 5 wherein in that the management/diagnosis module (ULG) of the automatic distributor (2) sends the remote control apparatus (1) a string of data comprising at least one field containing the at least one item of information to be processed in response to a query message, characterised in that the logic unit (6) acquires the position in the data string of the at least one field and the query message in a step of the above-mentioned sequence of functional steps following the setting step (step 20).

10. Apparatus according to claim 9, characterised in that the logic unit (6) acquires the position in the data string of the at least one field containing the at least one item of information to be processed and the query message immediately before sending the query message (step 25) to the management/diagnosis module (ULG).

11. Apparatus according to claim 8 characterised in that, after having acquired the query message and the position in the data string of at least one field containing the at least one item of information to be processed, the logic unit (6) sends (step 25) the query message to the management/diagnosis module (ULG), acquires (step 26) the at least one item of information to be processed from the data string recorded in the means (5) and processes said one item of information (step 27).

12. Apparatus according to claim 3 associated with at least two management/diagnosis modules (ULG), characterised in that the management/diagnosis modules (ULG) are connected to scanning means (30) controlled by the logic unit (6) of the remote control apparatus (1) by means of the first connection (8).

13. Apparatus according to claim 5 associated with at least two management/diagnosis modules (ULG) characterised in that, after having acquired the current time (step 21), the logic unit (6) performs in order at least the following additional functional steps:
- comparing (step 41) the current time with a first reference value (H1) associated with one of the management/diagnosis modules (ULG): if the current time is lower than the reference value (H1), comparing (step 42) the current time with a further reference value (H2) associated with a further management/diagnosis module (ULG2), otherwise acquiring (step 43) at least the query message (MI1) to be sent to the management/diagnosis module (ULG), increasing (step 44) the reference value (H1) by a predetermined quantity (dH1) and sending (step 25) the query message (MI1) to the management/diagnosis module (ULG);
- if the current time is lower than the further reference value (H2), waiting for a predetermined time T (step 23) before acquiring the current time again (step 21), otherwise acquiring (step 45) at least the query message (MI2) to be sent to the further management/diagnosis module (ULG), increasing (step 46) the further reference value H2 by a predetermined quantity (dH2) and sending (step 25) the respective query message (MI2) to the further management/diagnosis module (ULG).

14. Apparatus according to claim 13 wherein, in response to a query message(MI1, MI2), the respective management/diagnosis module (ULG1, ULG2) sends a string of data to the remote control apparatus (1), characterised in that the logic unit 6 also acquires (step 43, respectively step 45) the position (POS1, POS2) in the string of data issued by the management/diagnosis module (ULG1, ULG2) of the at least one field containing the at least one item of information to be processed before increasing (step 44, respectively step 46) the reference value (H1), respectively the further reference value (H2), by a predetermined quantity (dH1, respectively dH2).
